# EUROPÄISCHE PATENTANMELDUNG

(11) **EP 4 631 348 A1**
(43) Veröffentlichungstag der Anmeldung: **15.10.2025**
(21) Anmeldenummer: 24198568.8
(22) Anmeldetag: 05.09.2024
(51) Int. Cl.: A01G 9/02, B65D 85/52

(54) **GEFÄSSKOMPONENTE, GEFÄSSEINHEIT, VERFAHREN ZUR HERSTELLUNG**

(30) Priorität: 10.04.2024 DE 102024109997
(71) Anmelder: KDT GmbH & Co. KG, 59457 Werl (DE)
(72) Erfinder: Kies, Frank, 58739 Wickede (DE)
(74) Vertreter: Fritz Patent- und Rechtsanwälte PartmbB

(57) **Zusammenfassung**

Die Erfindung betrifft eine Gefäßkomponente (100) für eine Gefäßeinheit (200) für pflanzliche Gewebekulturen wie Pflanzensetzlinge oder Lebensmittel umfassend wenigstens ein Gefäßelement (1), welches als Gefäßkörper (2) mit einem Boden (21) und wenigstens einer Wandung (22) und einer Öffnung (23), welcher einen Innenraum (24) oder als ein Deckel (3) ausgebildet ist, und wobei das Gefäßelement (1) wenigstens eine Vertiefung (11) und wenigstens eine Dichtung (4) aufweist, wobei die Dichtung (4) in der Vertiefung (11) aufgenommen ist. Die Dichtung (4) weist eine stoffschlüssige Verbindung mit dem Gefäßelement (1) auf. Weiter betrifft die Erfindung eine Gefäßeinheit (200) und ein Verfahren zur Herstellung einer Gefäßkomponente (100).

## Beschreibung

Die vorliegende Erfindung betrifft eine Gefäßkomponente für eine Gefäßeinheit für pflanzliche Gewebekulturen wie Pflanzensetzlinge oder Lebensmittel umfassend wenigstens ein Gefäßelement, welches als Gefäßkörper oder als Deckel ausgebildet ist und eine Dichtung umfasst.

Gefäßkomponenten, wie Laborbecher, dienen als Transportgefäße für Pflanzensetzlinge oder Lebensmittel und werden in hohen Stückzahlen aus Kunststoff gefertigt. Die Gefäßkomponenten müssen den hygienischen Anforderungen an die Laborumgebung und/oder an die Bedingungen der Lebensmittelverarbeitung entsprechen und vor allem kostengünstig sein.

Aus dem Stand der Technik sind verschiedene Gefäßkomponenten bekannt geworden.

Aus der DE 20 2016 102 393 U1 ist ein Laborbecher bekannt geworden, bei welchem eine Dichtung zwischen dem Becher und dem Deckel eingelegt wird. Die steife Gummidichtung kann die Produktionstoleranzen nicht zuverlässig ausgleichen. Gerade bei kalten Temperaturen ist die Dichtung so steif, dass Luft zwischen der Dichtung und dem Becher in den Innenraum des Bechers eindringen kann, wo beispielsweise der Pflanzensetzling vorhanden ist.

Es ist daher die Aufgabe der vorliegenden Erfindung eine verbesserte Gefäßkomponente und ein Verfahren zur Herstellung der Gefäßkomponente zur Verfügung zu stellen, welche eine noch bessere Abdichtung ermöglicht und gleichzeitig kostengünstig produzierbar ist.

Die Aufgabe wird durch eine Gefäßkomponente mit den Merkmalen nach Anspruch 1, eine Gefäßeinheit mit den Merkmalen nach Anspruch 11 und ein Verfahren zur Herstellung der Gefäßkomponente für eine Gefäßeinheit mit den Merkmalen nach Anspruch 13 gelöst. Bevorzugte Weiterbildungen sind Gegenstand der Unteransprüche. Weitere Vorteile und Merkmale ergeben sich aus der allgemeinen Beschreibung und aus der Beschreibung des Ausführungsbeispiels.

Die erfindungsgemäße Gefäßkomponente für pflanzliche Gewebekulturen wie Pflanzensetzlinge oder Lebensmittel oder dergleichen umfasst
- wenigstens ein Gefäßelement, welches als
   - Gefäßkörper mit einem Boden und wenigstens einer Wandung und einer Öffnung, welcher einen Innenraum oder
   - als ein Deckel ausgebildet ist, und
- wobei das Gefäßelement wenigstens eine Vertiefung aufweist, wobei eine Dichtung in der Vertiefung aufgenommen ist.

Die Dichtung weist eine, insbesondere unmittelbare, stoffschlüssige Verbindung mit dem Gefäßelement auf.

Die Erfindung hat viele Vorteile. Ein erheblicher Vorteil der Erfindung ist, dass die durch die stoffschlüssige Verbindung der Dichtung mit dem Gefäßelement die Dichtigkeit zwischen dem Deckel und dem Gefäßkörper beim Verschließen. Dadurch kann eine bessere Dichtigkeit erreicht werden als bei den im Stand der Technik bekannten Lösungen. Weiter kann eine stoffschlüssige Verbindung der Dichtung mit dem Gefäßelement besonders kostengünstig hergestellt werden, sodass sich die Gefäßkomponente auch für eine Serien- oder Massenproduktion eignet.

Insbesondere sind die Gefäßkomponente und die Dichtung direkt und/oder unmittelbar stoffschlüssig miteinander verbunden. Vorteilhaft ist insbesondere kein Kleber oder ein anderer Stoff, wie ein Haftvermittler oder dergleichen, zwischen der Dichtung und dem Gefäßelement vorhanden.

Bevorzugt ist die Dichtung, insbesondere vollständig, in und/oder innerhalb der Vertiefung aufgenommen. Insbesondere steht nur die Oberfläche der Nut in direktem Kontakt mit der Dichtung. Insbesondere erstreckt sich wenigstens ein Teil der Dichtung bis über einen Rand der Vertiefung nach oben hinaus. Vorzugsweise erstreckt sich die Dichtung nicht seitlich über den Rand der Vertiefung. Vorteilhaft kann dadurch eine definierte Dichtfläche zur Verfügung gestellt werden. Weiter kann durch die Erstreckung der Dichtung über den Rand der Vertiefung nach oben, d. h. von der Gefäßkomponente weg, auch ein Spalt zu einem Deckel oder einem Gefäßkörper dicht abgeschlossen werden. Vorteilhaft erstreckt sich die Dichtung in Höhenrichtung, d. h. von der Gefäßkomponente weggerichtet, über den Rand der Vertiefung hinaus.

Besonders bevorzugt ist die Vertiefung als Nut ausgebildet. Insbesondere ist die Dichtung umfänglich geschlossen. Vorteilhaft umschließt die Nut die Öffnung des Gefäßkörpers umfänglich. Vorzugsweise ist die Dichtung so angeordnet, dass sie sich wenigstens im geschlossenen Zustand einer Gefäßeinheit um einen zu dichtenden Bereich, wie eine Öffnung eines Gefäßkörpers, herum erstreckt.

Vorzugsweise ist die Dichtung nahtlos ausgebildet. Vorteilhaft weist die Dichtung keine Nahtstelle auf, an welcher ein Anfang und ein Ende einer Dichtung miteinander verbunden sind. Vorteilhaft kann hierdurch eine Dichtigkeit noch weiter verbessert werden.

Bevorzugt ist die Dichtung als eine elastomere Dichtung ausgebildet. Insbesondere ist die Dichtung als eine Schaumdichtung, vorzugsweise als eine Weichschaumdichtung ausgebildet. Vorzugsweise ist die Dichtung als Dichtung aus Polyurethanweichschaum ausgebildet. Vorteilhaft ist eine Dichtung aus Polyurethanweichschaum besonders nachgiebig und kann dadurch auch kleinste Fertigungstoleranzen und Unebenheiten ausgleichen.

Insbesondere liegt eine dauerhafte und unlösbare Verbindung der Dichtung mit der Gefäßkomponente vor. Vorteilhaft ist die direkte stoffschlüssige Verbindung durch chemische Reaktion hergestellt, sodass die Dichtung nicht mehr zerstörungsfrei von der Gefäßkomponente trennbar ist. Vorteilhaft ist die Verbindung besonders dicht, insbesondere luftdicht, und daher auch für Laboranwendungen und Anwendungen im Bereich der Lebensmittelindustrie geeignet.

Vorzugsweise ist die Dichtung als eine frei auftragende Dichtung ausgebildet. Vorteilhaft wird eine freitragende Dichtung auch als Formed-in-Place-Dichtung bezeichnet. Vorteilhaft ist eine solche Dichtung besonders kostengünstig herstellbar. Darüber hinaus ist eine solche Dichtung auch in Verbindung mit Lebensmitteln nutzbar.

Bevorzugt ist das Gefäßelement aus Kunststoff, insbesondere Polypropylen, ausgebildet. Vorteilhaft kann Propolyen die hygienischen Anforderungen an Laborumgebungen und auch die Lebensmittelindustrie problemlos erfüllen. Darüber hinaus ist Polypropylen ein Thermoplast und dadurch leicht verarbeitbar und auch besonders umweltschonend, da es wieder einschmelzbar ist.

Insbesondere ist das Gefäßelement durch Spritzguss hergestellt. Insbesondere weist das Gefäßelement eine dünne Wandstärke, insbesondere von weniger als 0,5 mm, auf. Vorteilhaft sind dünnwandige Spritzgussteile besonders kostengünstig in der Herstellung.

Weitere vorteilhafte Weiterbildungen der Gefäßkomponente ergeben sich aus der allgemeinen Beschreibung und aus der Beschreibung des Ausführungsbeispiels.

Die erfindungsgemäße Gefäßeinheit umfasst zwei Gefäßelemente, wobei ein Gefäßelement als Gefäßkörper und ein Gefäßelement als Deckel ausgebildet ist und wobei ein Gefäßelement von einer zuvor beschriebenen Gefäßkomponente umfasst ist und/oder ein Bestandteile einer zuvor beschriebenen Gefäßkomponente bildet.

Auch die erfindungsgemäße Gefäßeinheit hat viele Vorteile. Ein erheblicher Vorteil der Gefäßeinheit ist, dass durch die stoffschlüssige Verbindung der Dichtung mit dem einen Gefäßelement eine besonders hohe Dichtigkeit erzielbar ist. Darüber hinaus ist die Gefäßeinheit besonders kostengünstig produzierbar.

Bevorzugt ist ein Dichtungsbereich zwischen beiden Gefäßkomponenten vorhanden. Vorzugsweise ist die Vertiefung mit der Dichtung im Dichtungsbereich angeordnet. Insbesondere eine Dichtfläche des Dichtungsbereichs an dem weiteren Gefäßelement, welche nicht die Dichtung aufweist, ist eben und glatt ausgebildet. Vorteilhaft kann der Dichtbereich dadurch besonders gut dichten. Gleichzeitig ist er kostengünstig produzierbar.

Besonders bevorzugt sind an den Gefäßelementen ineinandergreifende Führungselemente vorhanden. Insbesondere sind die Führungselemente als zylindrische Stiftelemente und Keilelemente ausgebildet. Vorteilhaft werden die zylindrischen Stiftelemente wenigstens abschnittsweise an den Keilelementen geführt. Vorteilhaft sind die zylindrischen Stiftelemente an einem Gefäßelement und die Keilelemente an dem anderen Gefäßelement angeordnet. Vorteilhaft greifen die Führungselemente beim Verschießen der Gefäßeinheit ineinander, insbesondere wird der Deckel zu dem Gefäßkörper geführt und ermöglicht ein umfänglich gleichmäßiges Schließen der Gefäßeinheit. Darüber hinaus wird die Dichtung umfänglich gleichmäßig beim Schließen verformt.

Insbesondere weist die Gefäßeinheit wenigstens eine Sicherungseinheit auf. Vorzugsweise umfasst die Sicherungseinheit ineinandergreifende Sicherungselemente zur Herstellung einer gesicherten, insbesondere formschlüssigen Verbindung, zwischen den Gefäßelementen.

Weitere vorteilhafte Weiterbildungen der Gefäßeinheit ergeben sich aus der allgemeinen Beschreibung und aus der Beschreibung des Ausführungsbeispiels.

Bei dem erfindungsgemäßen Verfahren zur Herstellung einer zuvor beschriebenen Gefäßkomponente wird die Dichtung als pastöse Masse in die Vertiefung der Gefäßkomponente eingebracht, sodass eine unmittelbare Verbindung, insbesondere eine dauerhafte und unlösbare Verbindung, mit dem Gefäßelement vorliegt. Vorzugsweise liegt eine stoffschlüssige Verbindung mit dem Gefäßelement vor. Insbesondere nach der Ausdehnung, insbesondere einem Aufqillen, durch die chemische Reaktion erstreckt sich die Dichtung bis über den Rand der Vertiefung nach oben hinaus.

Vorzugsweise wird die pastöse Masse in einer Umgebung aufgetragen, welche wenigstens im Wesentlichen durch Umgebungsluft gebildet wird.

Auch das erfindungsgemäße Verfahren hat viele Vorteile. Ein erheblicher Vorteil des Verfahrens ist, dass die Dichtung als pastöse Masse aufgetragen wird und dann chemisch reagiert und sich mit dem Gefäßelement verbindet. Dadurch wird kein zweiter Spritzgussvorgang notwendig, um die Dichtung mit dem Gefäßelement zu verbinden. Vorteilhaft ermöglicht das Verfahren eine Herstellung einer günstig produzierbaren Gefäßkomponente mit hoher Dichtigkeit.

Insbesondere wird die pastöse Masse durch eine Düse oder Nadel in die Vertiefung eingespritzt. Vorteilhaft ermöglicht das Einspritzen der pastösen Masse durch die Düse oder Nadel eine besonders präzise Verarbeitung der pastösen Masse. Vorteilhaft wird dadurch erreicht, dass die pastöse Masse ausschließlich mit der Oberfläche der Nut in Kontakt kommt.

Insbesondere wird eine Oberfläche der Vertiefung aktiviert, bevor die pastöse Maße in die Vertiefung eingebracht wird. Insbesondere erfolgt die Aktivierung durch eine Coronabehandlung oder Plasmabehandlung. Vorteilhaft kann dadurch besonders belastbare Verbindung zwischen der Dichtung und dem Gefäßelement erzeugt werden. Vorteilhaft kann hierdurch eine besonders hohe Dichtigkeit erzeugt werden.

Insbesondere umfasst die pastöse Masse wenigstens zwei Komponenten, die unmittelbar vor dem Einbringen in die Vertiefung gemischt werden. Vorteilhaft kann dadurch eine chemische Reaktion, wie eine chemische Reaktion, insbesondere eine Additionsvernetzung, gezielt durch Mischung von zwei Reaktanden in Gang gebracht werden. Die Reaktanden können dadurch besonders kostengünstig über einen langen Zeitraum aufbewahrt werden. Weiter kann eine chemische Reaktion genau gesteuert werden.

Vorzugsweise wird die pastöse Masse durch einen Roboter auf das Gefäßelement aufgebracht. Vorteilhaft kann dadurch der Prozess der Auftragung der Dichtung automatisiert werden, z. B. für eine Serienfertigung oder eine Massenfertigung bei geringen Kosten.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:
- Fig. 1: eine schematische perspektivische Ansicht einer erfindungsgemäßen Gefäßeinheit mit einer erfindungsgemäßen Gefäßkomponente;
- Fig. 2: eine schematische Schnittansicht der Gefäßeinheit;
- Fig. 3: eine schematische Detailansicht eines Bereichs um die Dichtung der Gefäßeinheit;
- Fig. 4: eine schematische Seitenansicht der als Gefäßkörper ausgebildeten Gefäßkomponente;
- Fig. 5: eine schematische Draufsicht auf die als Gefäßkörper ausgebildete Gefäßkomponente;
- Fig. 6: eine schematische Seitenansicht des als Deckel ausgebildeten Gefäßelements; und
- Fig. 7: eine schematische Unteransicht des als Deckel ausgebildeten Gefäßelements.

Es ist nicht notwendig, dass eine erfindungsgemäße Gefäßkomponente und/oder eine erfindungsgemäße Gefäßeinheit und/oder ein erfindungsgemäßes Verfahren alle nachfolgend beschriebenen Merkmale aufweist. Es ist auch möglich, dass eine erfindungsgemäße Gefäßkomponente und/oder eine erfindungsgemäße Gefäßeinheit und/oder ein erfindungsgemäßes Verfahren nur einzelne Merkmale des nachfolgend beschriebenen Ausführungsbeispiels aufweist.

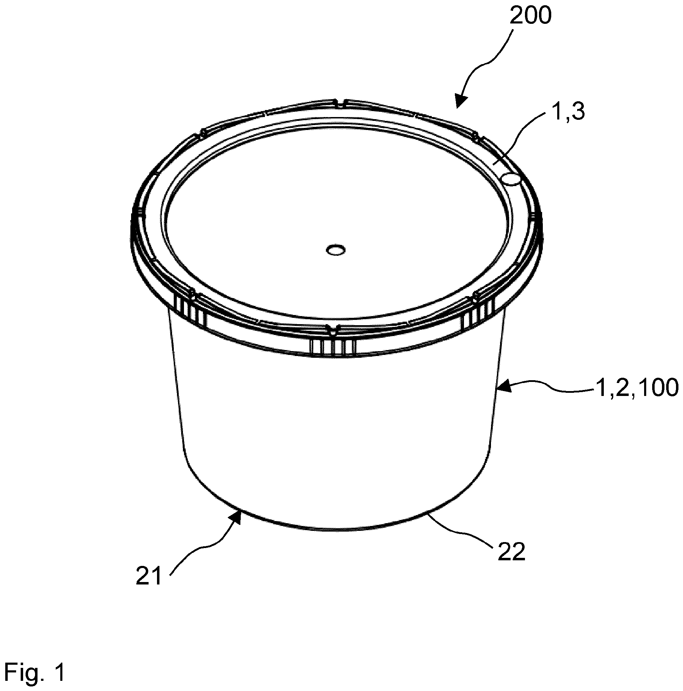

Fig. 1 zeigt eine schematische perspektivische Ansicht einer erfindungsgemäßen Gefäßeinheit 200 mit einer erfindungsgemäßen Gefäßkomponente 100. Die Gefäßkomponente 100 umfasst hier ein als Gefäßkörper 2 ausgebildetes Gefäßelement 1 und ein als Deckel 3 ausgebildetes Gefäßelement 1. Das als Gefäßkörper 2 ausgebildete Gefäßelement 1 umfasst einen Boden 21 und eine umfänglich geschlossene Wandung 22 mit einer Öffnung 23 und einem Innenraum 24. In dem Innenraum 24 kann ein Pflanzensetzling eingesetzt werden. Im geschlossenen Zustand kann der Innenraum 24 durch die Dichtung 4 im Wesentlichen Luftdicht verschlossen werden. Durch die unmittelbare stoffschlüssige Verbindung der Dichtung 4 mit dem als Gefäßkörper 2 ausgebildeten Gefäßelement 1 ist ein luftdichtes Verschließen des Innenraums 23 möglich, sodass ein aufgenommener Pflanzensetzling und/oder ein aufgenommenes Lebensmittel oder ein Lebensmittelbestandteil geschützt wird. Insbesondere können kein Schmutz oder keine Verunreinigungen über einen Dichtungsbereich 5 in den Innenraum 24 gelangen.

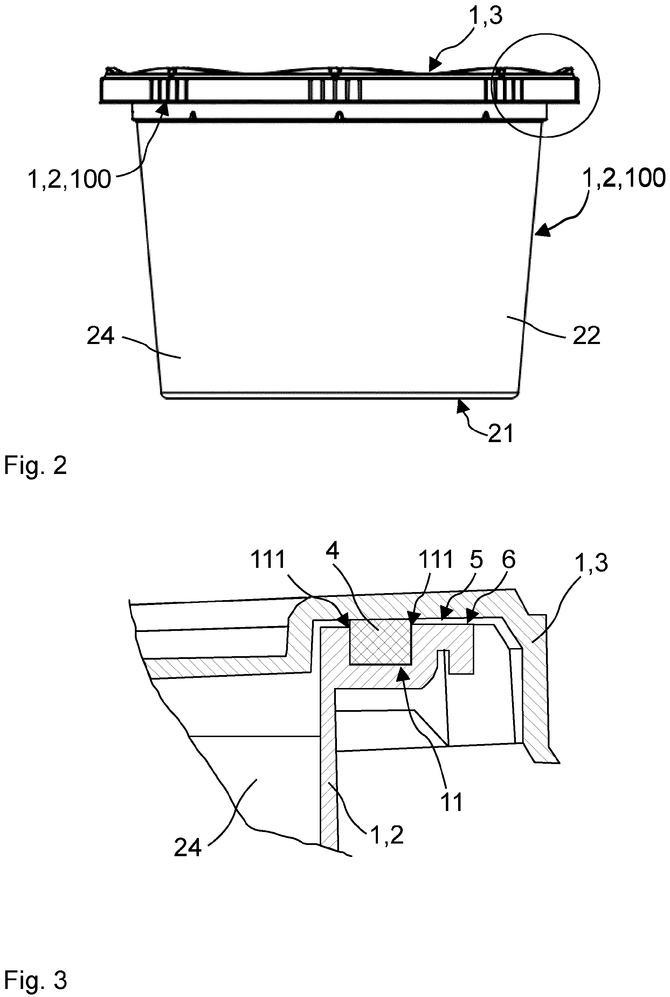

Fig. 2 zeigt eine schematische Schnittansicht der Gefäßeinheit 200. Die Dichtung 4 ist hier in einer als Nut 11 ausgebildeten Vertiefung 11 vollständig aufgenommen. Die Dichtung 4 ist innerhalb der Ränder 111 der Vertiefung 11 angeordnet. Weiter erstreckt sich die Dichtung 4 bis über den Rand 111 der Vertiefung 11 nach oben hinaus, d. h. von der Gefäßkomponente 100 nach außen weg, sodass die Dichtung 4 beim Aufsetzen des Deckels 3 als zweites Gefäßelement 3 die Dichtung 4 zusammendrückt und somit einen dichten Verschluss der Öffnung 23 des Innenraums 24 ermöglicht.

Fig. 3 zeigt eine schematische Detailansicht eines Bereichs um die Dichtung 4 der Gefäßeinheit 200. Die Nut 11 hat einen rechteckigen Querschnitt; sodass eine lange Dichtungslänge mit einer gleichmäßigen Anpressung der Dichtung 4 an dem Deckel herstellbar ist. Die Dichtung 4 ist hier als Dichtung aus Polyurethanweichschaum ausgebildet 4. Die Dichtung 4 ist weiter als frei auftragende Dichtung ausgebildet, welche auch als Formed-In-Place-Dichtung 4 bezeichnet wird.

Zur Herstellung der Gefäßeinheit 200 werden zunächst der Gefäßkörper 2 und der Deckel 3 als Gefäßelemente 1 hergestellt. Ein Gefäßelemente 1 umfasst eine Vertiefung 11 zur Aufnahme der Dichtung 4. Hier sind die Gefäßelemente 1 durch Spritzguss hergestellt. Dadurch ist es möglich die Gefäßelemente 1 hier mit einer dünnen Wandstärke von weniger als 0,5 mm auszuführen. Weiter sind die Gefäßelemente 1 hier aus Polypropylen ausgebildet. Nach der Fertigstellung der Gefäßelemente 1 wird die Dichtung 4 in der Nut 11 hergestellt. Vorteilhaft ist Polypropylen ein Material, welches die hygienischen Anforderungen der Lebensmittelindustrie und auch von Laboranwendungen, wie in Reinräumen, erfüllt.

Hier wird eine pastöse Masse in die Nut 11 eingebracht. Die pastöse Masse umfasst hier zwei Komponenten, welche direkt vor dem Einbringen in die Nut 11 in einer Düse oder Nadel gemischt werden. Die Komponenten in der pastösen Masse lösen dann eine chemische Reaktion aus, sodass die Dichtung 4 aufquillt. Durch diese Additionsvernetzung wird auch eine unmittelbare stoffschlüssige Verbindung mit dem Gefäßelement 1 und genauer der Oberfläche der Nut und/oder der Oberfläche der Nutwandung ermöglicht. Die Verbindung ist dauerhaft und unlösbar, sodass die Dichtung 4 nicht mehr zerstörungsfrei entfernbar ist. Durch eine Corona oder Plasma Aktivierung vor dem Einbringen der pastösen Masse kann die stoffschlüssige Verbindung noch weiter verbessert werden. Hier wird die pastöse Masse weiter durch einen Roboter in die Nut 11 eingebracht. Ein Einsatz des Fertigungsverfahrens in einer Serienfertigung ist problemlos möglich ist.

Nach dem Auftragen reagiert die pastöse Masse und quillt auf. Beim Aufquillen wächst die Schaumdichtung 4 in die Höhe und erstreckt sich im Endzustand bis über die Ränder 111 der Vertiefung nach oben hinaus, jedoch nicht seitlich über die Ränder 111 der Vertiefung. Hierdurch ist es möglich, an dem Deckel 3 als Gefäßelement 1 eine ebene Dichtfläche 6 im Dichtungsbereich 5 auszubilden.

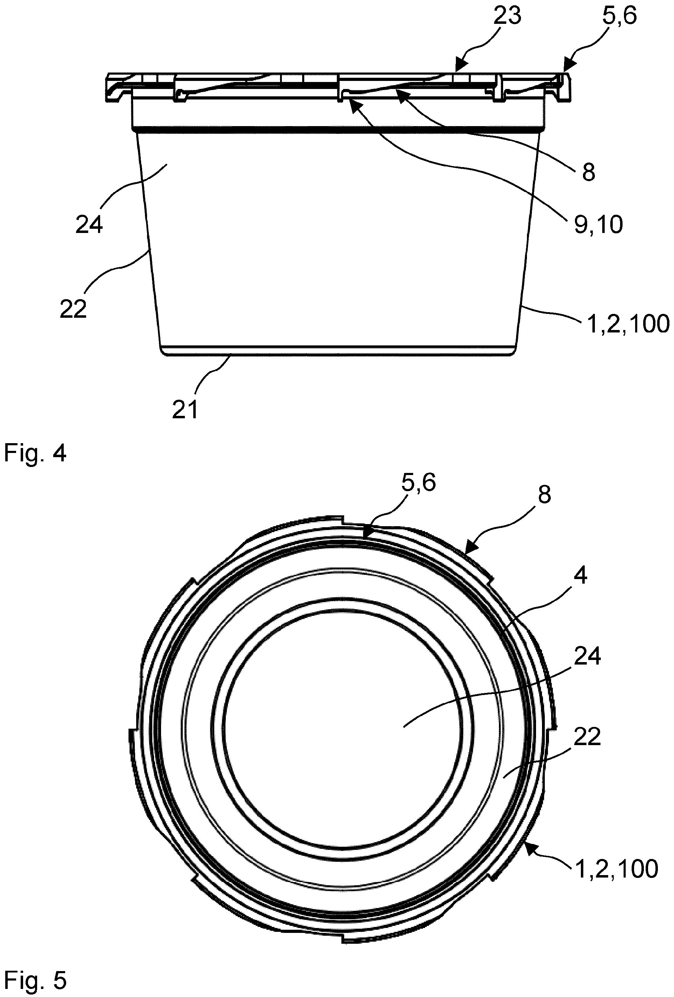

Fig. 4 zeigt eine schematische Seitenansicht der als Gefäßkörper 2 ausgebildeten Gefäßkomponente 100. An der Außenseite sind hier als Keilelemente 8 ausgebildete Führungselemente 8 vorhanden. Am Ende der Keilelemente 8 ist ein Sicherungselement 10 einer Sicherungseinheit 9 ausgebildet. Dadurch kann die Gefäßeinheit 200 im geschlossenen Zustand gesichert werden, sodass diese sich nicht selbstständig öffnet.

Fig. 5 zeigt eine schematische Draufsicht der als Gefäßkörper 2 ausgebildeten Gefäßkomponente 100. Die Wandung 22 erstreckt sich um den Boden 21 und ist umfänglich geschlossen. Die Öffnung 23 ist rund ausgebildet. Die Nut 11 erstreckt sich um die Öffnung 23 und ist umfänglich geschlossen. Die Dichtung 4 ist dadurch im aufgequillten und unmittelbar stoffschlüssig verbundenen Zustand nahtlos ausgebildet, sodass auch an einer solchen Schwachstelle keine Luft oder Schutz in den Innenraum 24 gelangen kann.

Die Keilelemente 8 sind hier umfänglich in gleichmäßigem Abstand über den Umfang der Öffnung 24 verteilt.

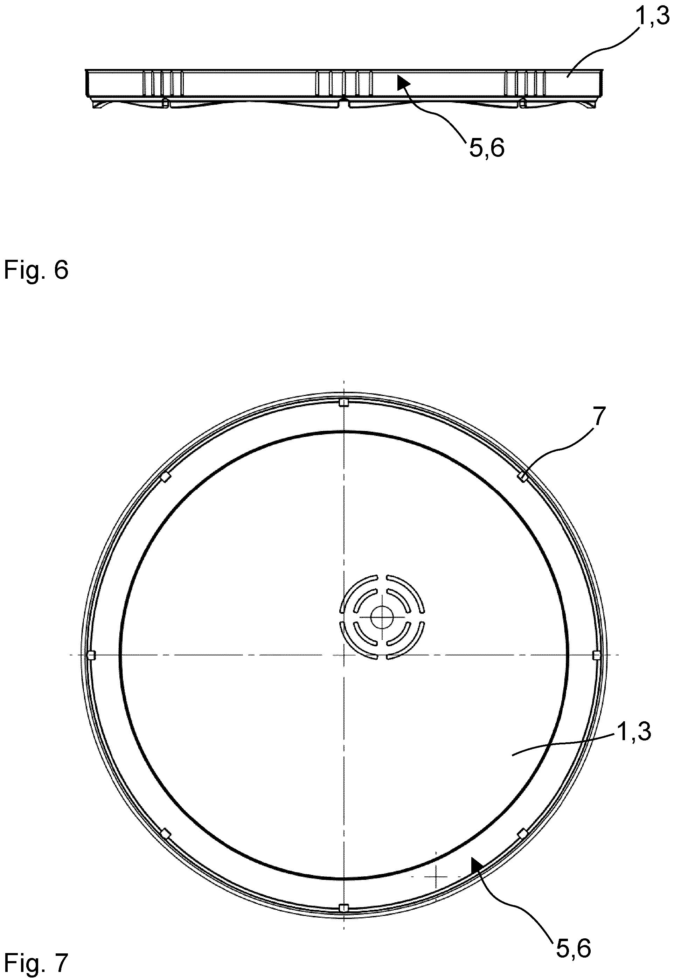

Fig. 6 zeigt eine schematische Seitenansicht des als Deckel 3 ausgebildeten Gefäßelements 1. Im Dichtungsbereich 5 ist die Dichtungsfläche 5 ausgebildet.

Fig. 7 zeigt eine schematische Unteransicht des als Deckels 3 ausgebildeten Gefäßelements 1. An dem Gefäßelemente 1 sind zylindrische Stiftelemente 7 ausgebildet. Die zylindrischen Stiftelemente 7 und die Keilelemente 8 sind in gleichmäßigem Abstand über den Umfang der Gefäßelemente 1 verteilt. Beim Verschließen wird der Deckels 3 so auf den Gefäßkörper 2 aufgesetzt, dass die zylindrischen Stiftelemente 7 unter die Keilelemente 8 fassen. Dadurch wird die Dichtung 4 durch eine Drehbewegung gleichmäßig angedrückt. Zur Sicherung können die zylindrischen Stiftelemente 7 als Sicherungselemente 10 in die als Mulden ausgebildeten Sicherungselemente 10 der Sicherungseinheit 9 eingeführt werden, sodass eine lösbare formschlüssige Verbindung zwischen dem Deckel 3 und dem Gefäßkörper 2 vorliegt.

### Bezugszeichen:

- 1: Gefäßelement
- 11: Vertiefung
- 111: Rand der Vertiefung
- 2: Gefäßkörper
- 21: Boden
- 22: Wandung
- 23: Öffnung
- 24: Innenraum
- 3: Deckel
- 4: Dichtung
- 5: Dichtungsbereich
- 6: Dichtungsfläche
- 7: zylindrisches Stiftelement
- 8: Keilelement
- 9: Sicherungseinheit
- 10: Sicherungselement
- 100: Gefäßkomponente
- 200: Gefäßeinheit

## Patentansprüche

1. Gefäßkomponente (100) für eine Gefäßeinheit (200) für pflanzliche Gewebekulturen wie Pflanzensetzlinge oder Lebensmittel umfassend
- wenigstens ein Gefäßelement (1), welches als
- Gefäßkörper (2) mit einem Boden (21) und wenigstens einer Wandung (22) und einer Öffnung (23), welcher einen Innenraum (24) oder
- als ein Deckel (3) ausgebildet ist, und
- wobei das Gefäßelement (1) wenigstens eine Vertiefung (11) und wenigstens eine Dichtung (4) aufweist, wobei die Dichtung (4) in der Vertiefung (11) aufgenommen ist,
**dadurch gekennzeichnet, dass** die Dichtung (4) eine stoffschlüssige Verbindung mit dem Gefäßelement (1) aufweist.

2. Gefäßkomponente (100) nach Anspruch 1, wobei die Dichtung (4) vollständig in der Vertiefung (11) aufgenommen ist, und wobei sich wenigstens ein Teil der Dichtung (4) bis über einen Rands (111) der Vertiefung (11) nach oben hinaus, insbesondere von dem Gefäßelement (1) weg, erstreckt.

3. Gefäßkomponente (100) nach einem der vorhergehenden Ansprüche, wobei die Vertiefung (11) als Nut (11) ausgebildet ist, welche sich umfänglich geschlossen ist, und sich insbesondere um die Öffnung (23) herum erstreckt.

4. Gefäßkomponente (100) nach dem vorhergehenden Anspruch, wobei die Dichtung (4) nahtlos ausgebildet ist.

5. Gefäßkomponente (100) nach dem vorhergehenden Anspruch, wobei die Dichtung (4) als Dichtung (4) aus Polyurethanweichschaum (4) ausgebildet ist.

6. Gefäßkomponente (100) nach einem der vorhergehenden Ansprüche, wobei die Dichtung (4) mit der Gefäßkomponente (1) chemisch reagiert ist, insbesondere durch eine Additionsvernetzung, sodass eine dauerhafte und unlösbare Verbindung vorliegt.

7. Gefäßkomponente (100) nach einem der beiden vorhergehenden Ansprüche, wobei die Dichtung (4) als eine frei auftragende Dichtung (4) ausgebildet ist.

8. Gefäßkomponente (100) nach einem der vorhergehenden Ansprüche, wobei das Gefäßelement (2, 3) aus Kunststoff, insbesondere Polypropylen, ausgebildet ist.

9. Gefäßkomponente (100) nach einem der vorhergehenden Ansprüche, wobei das Gefäßelement (2, 3) durch Spritzguss hergestellt ist.

10. Gefäßkomponente (100) nach einem der vorhergehenden Ansprüche, wobei das Gefäßelement (2, 3) eine dünne Wandstärke, insbesondere von weniger als 0,5 mm, aufweist.

11. Gefäßeinheit (200), umfassend zwei Gefäßelemente (1), wobei ein Gefäßelement (1) als Gefäßkörper (2) und ein Gefäßelement (1) als Deckel (3) ausgebildet ist, und wobei ein Gefäßelement (1) ein Bestandteil einer Gefäßkomponente (100) nach einem der vorhergehenden Ansprüche ist, und wobei insbesondere ein Dichtungsbereich (5) zwischen beiden Gefäßkomponenten (100) vorhanden ist, welcher die Vertiefung (11) mit der Dichtung (4) im Dichtungsbereich (5) angeordnet ist, wobei insbesondere eine Dichtfläche (6) des Dichtungsbereichs (5) an dem weiteren Gefäßelement (1) eben ausgebildet ist

12. Gefäßeinheit (100) dem vorhergehenden Anspruch, wobei an den Gefäßelementen (1) ineinandergreifende Führungselemente (7, 8) vorhanden sind, welche insbesondere als zylindrische Stiftelemente (7) und Keilelemente (8) ausgebildet sind und/oder die wenigstens eine Sicherungseinheit (9) aufweist mit ineinandergreifenden Sicherungselementen (10) zur Herstellung einer gesicherten Verbindung zwischen den Gefäßelementen (1) .

13. Verfahren zur Herstellung einer Gefäßkomponente (1) nach einem der vorhergehenden Ansprüche, **dadurch gekennzeichnet, dass** die Dichtung (4) als pastöse Masse in die Vertiefung (11) der Gefäßkomponente (100) eingebracht wird, sodass die Dichtung (4) dann chemisch reagiert und eine stoffschlüssige, insbesondere eine dauerhafte und unlösbare Verbindung vorliegt Verbindung mit dem Gefäßelement (1) vorliegt, und die Dichtung (4) sich insbesondere über den Rands (111) der Vertiefung (11) nach oben hinaus erstreckt, wobei insbesondere die pastöse Masse durch eine Düse oder Nadel in die Vertiefung (11) eingespritzt wird.

14. Verfahren nach dem vorhergehenden Anspruch, wobei eine Oberfläche der Vertiefung (11) durch eine Coronabehandlung oder Plasmabehandlung aktiviert wird, bevor die pastöse Maße in die Vertiefung (11) eingebracht wird.

15. Verfahren, nach einem der zwei vorhergehenden Ansprüche, wobei die pastöse Masse wenigstens zwei Komponenten umfasst, die unmittelbar vor dem Einbringen in die Vertiefung (11) gemischt werden und/oder wobei die pastöse Masse durch einen Roboter auf das Gefäßelement (1) aufgebracht wird.
